# EUROPÄISCHE PATENTSCHRIFT

(11) **EP 3 830 517 B1**
(45) Veröffentlichungstag und Bekanntmachung des Hinweises auf die Patenterteilung: **11.09.2024**
(21) Anmeldenummer: 19748656.6
(22) Anmeldetag: 15.07.2019
(51) Int. Cl.: G01B 11/30, G01N 21/88, G01N 21/89, G01N 21/956, G06T 7/00

(54) **VERFAHREN UND VORRICHTUNG ZUR ERKENNUNG UND ANALYSE VON OBERFLAECHENFEHLERN DREIDIMENSIONALER OBJEKTE MIT EINER REFLEKTIERENDEN OBERFLAECHE, INSBESONDERE VON KRAFTFAHRZEUGKAROSSERIEN**
METHOD AND DEVICE FOR RECOGNISING AND ANALYSING SURFACE DEFECTS IN THREE-DIMENSIONAL OBJECTS HAVING A REFLECTIVE SURFACE, IN PARTICULAR MOTOR VEHICLE BODIES
PROCÉDÉ ET DISPOSITIF DE RECONNAISSANCE ET D'ANALYSE DE DÉFAUTS DE SURFACE D'OBJETS TRIDIMENSIONNELS PRÉSENTANT UNE SURFACE RÉFLÉCHISSANTE, EN PARTICULIER DE CARROSSERIES DE VÉHICULE AUTOMOBILE

(30) Priorität: 31.07.2018 DE 102018118602
(43) Veröffentlichungstag der Anmeldung: 09.06.2021
(73) Patentinhaber: Kasavala, Dhruv, 85764 Oberschleißheim (DE); Aryasomayajula, Sarma, 85748 Garching b. Muenchen (DE)
(72) Erfinder: Kasavala, Dhruv, 85764 Oberschleißheim (DE); Aryasomayajula, Sarma, 85748 Garching b. Muenchen (DE)
(74) Vertreter: Heilein, Ernst-Peter
(86) Internationale Anmeldenummer: PCT/DE2019/100655
(87) Internationale Veröffentlichungsnummer: WO 2020/025086

(56) Entgegenhaltungen:
- EP-B1- 1 464 920
- WO-A1-2018/130421
- WO-A1-2019/239307
- DE-A1- 3 021 448
- DE-B4- 10 006 663
- JP-A- 2007 183 225
- US-A- 4 863 268
- US-A- 5 367 378
- US-A- 5 568 258
- US-A1- 2013 057 678
- US-A1- 2014 201 022

## Beschreibung

Die vorliegende Erfindung betrifft ein Verfahren zur Erkennung und Analyse von Oberflächenfehlern dreidimensionaler Objekte mit einer reflektierenden Oberfläche, insbesondere von Kraftfahrzeugkarosserien, sowie eine Vorrichtung zur Erkennung und Analyse von Oberflächenfehlern dreidimensionaler Objekte mit einer reflektierenden Oberfläche, insbesondere von Kraftfahrzeugkarosserien, insbesondere nach einem solchen Verfahren, wenigstens umfassend: eine erste Beleuchtungseinrichtung, insbesondere einen Beleuchtungsbogen oder ein Handmodul, zur Projektion eines Beleuchtungsmusters auf eine Oberfläche des Objektes; eine, insbesondere durch eine Lichtschranke aktivierbare, Kamera zur Aufzeichnung von Bildern in Form einer Rastergrafik aus Pixeln; und eine Steuerungs- und Datenanalyseeinrichtung.

Die Zunahme von extremen Wetterphänomenen wie intensiven Regenfällen, heftigen Stürmen und starken Gewittern mit massiven Hagelschlägen führt dazu, dass die Oberfläche dreidimensionaler Objekte, insbesondere Kraftfahrzeuge aber auch Flugzeuge, die diesen Wetterphänomenen ausgesetzt sind, häufiger Schaden nehmen. Wird ein solcher Schaden vom Eigentümer bei einer Versicherung geltend gemacht, kommen stets Gutachter zum Einsatz, die den jeweiligen Schaden begutachten und meist manuell klassifizieren. Dieses Verfahren ist zeitintensiv, teuer und teilweise wenig transparent, da die Schadensklassifizierung unter Umständen stark von den subjektiven Einschätzungen einzelner Gutachter abhängen kann.

Objektive, automatisierte Verfahren zur Schadensklassifizierung wären deshalb wünschenswert, ihre Entwicklung weist aber insbesondere aufgrund der zumeist spiegelnden (reflektierenden) Oberflächen der zu untersuchenden Objekte eine Reihe von zu überwindenden Schwierigkeiten bei einer automatisierten Oberflächenuntersuchung auf.

Aus der DE 37 12 513 A1 ist in diesem Zusammenhang ein Verfahren und eine Vorrichtung zur Erkennung von Oberflächenfehlern eines Gegenstands, vorzugsweise zur Erkennung von Lackfehlern auf der Oberfläche einer Kraftfahrzeugkarosserie, bekannt, bei dem auf der Oberfläche mittels eines Beleuchtungssystems ein Lichtstreifen erzeugt und über den Gegenstand hinweggeführt wird, wobei dessen Relativbewegung bezüglich der Oberfläche schrittweise aufgezeichnet und zur Bestimmung von Oberflächenfehlern genutzt wird. Die DE 10 2010 015 566 A1 offenbart zudem ein Verfahren und System zur Vermessung spiegelnder Oberflächen, bei dem an einer Leuchtfläche mehrere Muster erzeugt werden, welche an der spiegelnden Oberfläche reflektiert und mit einer Sensorfläche einer Kamera erfasst werden, wobei aus den erfassten Messdaten, aus den bekannten Koordinaten der Leucht- und Sensorfläche und aus dem Abstand zwischen Sensor- und/oder Leuchtfläche und wenigstens einem auf der Oberfläche angeordneten Stützpunkt die Koordinaten von Oberflächenpunkten der untersuchten Oberfläche bestimmet werden. Die US 2014/201022 A1 offenbart ebenfalls ein System zur Schadensabschätzung von Oberflächenschäden von Fahrzeugen mit Hilfe von 3D-Scans. All diese Verfahren basieren auf dem "Scannen" der Oberfläche des zu untersuchenden Objekts und anschließender Berechnung einer, von einer Relativgeschwindigkeit zwischen Objekt und jeweiliger Vorrichtung und/oder einem Abstand zwischen Vorrichtung und Objekt abhängigen, Punktwolke, welche dann für eine weiter Oberflächenanalyse genutzt werden kann. Diese Verfahren sind rechnerisch und konstruktiv aufwendig.

Die WO 2018/130421 A1 offenbart eine mobile Vorrichtung und ein Verfahren zur Detektion und Klassifizierung von Schäden an einer Fahrzeugkarosserie. Bei dem hier beschriebenen Verfahren wird ein Fahrzeug durch eine Beleuchtungsbogen bewegt, welcher auf die Fahrzeugkarosserie ein Beleuchtungsmuster projiziert. Bei der Bewegung durch den Bogen werden mittels Videokameras Videobilder der Karosserie aufgenommen und die Distanz zwischen der Oberfläche der Karosserie und der jeweiligen Videokamera sowie die Geschwindigkeit des sich durch den Bogen bewegenden Fahrzeugs gemessen. Zur Identifizierung und Klassifizierung von Karosserieschäden über Verzerrungen in den Bildern der Beleuchtungsmuster erfolgt dann zunächst eine Synchronisierung der Distanzmessungen mit der Videobildaufzeichnung. Mit Hilfe bekannter Mustererkennungsverfahren werden dann Bereiche mit möglichen Schadstellen ausfindig gemacht. Die endgültige Identifizierung einer Stelle auf einer untersuchten Oberfläche als Oberflächenfehler kann jedoch explizit nachteilig erst dann erfolgen, wenn der als verdächtig betrachteten Oberflächenbereich auf mehreren aufeinanderfolgenden Bildern aufgefunden wird.

In der JP 2007 183 225 A wird eine Vorrichtung zur Oberflächenuntersuchung an Objekten mit glatter und hochreflektierender Oberfläche, wie bspw. KFZ-Karosserien, beschrieben. Dabei werden die Streifen eines auf die besagte Oberfläche projizierten Beleuchtungsmusters ausgewertet. Die eigentlich Fehleridentifikation erfolgt dazu über einen Vergleich mit entsprechenden Projektionen von Bildern auf idealen, fehlerfreien Oberflächen. Zur Identifizierung von Oberflächenfehlern werden dabei immer mindestens zwei Bilder benötigt: ein Bild des auf die zu untersuchenden Oberfläche projizierten Beleuchtungsmusters sowie ein Bild eines entsprechenden, auf eine ideale, fehlerfreie Oberfläche projizierten Musters.

Die US 4 863 268 A1 offenbart ein Verfahren sowie eine Vorrichtung zur Detektion von Oberflächenfehlern auf Oberflächen verschiedener Objekte, u. a. von KFZ-Karosserien und führt dabei eine Aufnahmetechnik weiter, die bereits in einer Vorläuferschrift (US 4 629 319) offenbart wurde. Besagte Aufnahmetechnik zeichnet sich dadurch aus, dass Licht einer Lichtquelle auf die zu untersuchende Oberfläche gestrahlt wird, von dort auf einen Retroreflektor trifft und dadurch weitgehend von der Einfallsrichtung des Lichtes unabhängig, in die Richtung reflektiert wird, aus der es kam, danach wiederum auf die zu untersuchende Oberfläche trifft, erneut reflektiert und schließlich vom Detektor (der nahe der Lichtquelle positioniert ist) aufgenommen wird. Ist die zu untersuchende Oberfläche eben, wird ein Lichtstrahl bei den beschriebenen Reflektionsvorgängen nicht anderweitig abgelenkt und trifft in erster Näherung an seinem Ausgangspunkt wieder auf. Weist die Oberfläche jedoch einen Oberflächenfehler auf (der sich bspw. durch eine lokale Änderung der Oberflächensteigung zeigt), wird der Lichtstrahl beim erneuten Auftreffen auf die Oberfläche abgelenkt und der Auftreffpunkt auf dem Detektor unterscheidet sich vom Ausgangspunkt. Bilder, die auf diese Art aufgezeichnet wurden, werden als "*DiffractoSight images*" bezeichnet.

Die DE 30 21 448 A1 offenbart schließlich ein Verfahren und eine Anordnung zur Erfassung räumlicher Abweichungen von einer glatten Ebene an der spiegelnden bzw. reflektierenden oder diffus streuenden Oberfläche von Gegenständen. Dazu werden an besagten Oberflächen reflektierte Lichtstrahlen einer Lichtquelle erfasst und deren Helligkeitsunterschiede ausgewertet. Als Lichtquellen kommen dabei laut Offenbarung vier Möglichkeiten in Frage: eine leuchtende Fläche mit gleichmäßiger Helligkeitsverteilung, deren Lichtstrahlen der spiegelnden bzw. reflektierenden oder diffus streuenden Oberfläche über ein optisches Gitter zugeführt werden; oder eine leuchtende Fläche mit ungleichmäßiger oder periodischer Helligkeits- oder Farbverteilung oder eine regelmäßige Anordnung mehrerer punktförmiger Strahler; oder eine Bildvorlage mit periodischer oder aperiodischer, schwarzweißer oder farbiger Helligkeitsstruktur, die auf die spiegelnde bzw. reflektierende oder diffus streuende Oberfläche projiziert wird. Die Auswertung erfolgt dann dadurch, dass die derart beleuchtete Oberfläche auf die lichtempfindliche Schicht einer Fernsehkamera abgebildet wird und dass das Bildsignal der Fernsehkamera (Videosignal) hinsichtlich der Helligkeits- bzw. Kontrastunterschiede der beleuchteten Oberfläche ausgewertet wird. Dazu wird das Videosignal quantisiert (digitalisiert) und die im Videosignal enthaltene Information, die von der im Bild überlagerten Rasterstruktur der Beleuchtungseinrichtung herrührt, abgetrennt. Anschließend kann dann eine Auswertung von Konturen oder Flächen hinsichtlich des Vorliegens eines Oberflächenfehlers erfolgen.

Ergänzend zu dem bereits genannten Stand der Technik sei noch auf die Druckschriften DE 10 2016 006 780 A1, DE 10 2015 119 240 B3, US 5 367 378 A, US 2013/057678 A1 sowie EP 0 997 201 B1 hingewiesen.

Hiervon ausgehend liegt der vorliegenden Erfindung die Aufgabe zugrunde, ein im Vergleich zum Stand der Technik verbessertes Verfahren und eine verbesserte Vorrichtung zur Erkennung und Analyse von Oberflächenfehlern dreidimensionaler Objekte mit einer reflektierenden Oberfläche bereitzustellen, welche schnell, kostengünstig und mobil einsetzbar sind und vorteilhaft eine objektive automatisierte Schadensklassifizierung von Oberflächenfehlern, insbesondere von Hagelschäden an Kraftfahrzeug- oder Flugzeugkarosserien ermöglichen.

Diese Aufgabe wird zunächst durch ein Verfahren zur Erkennung und Analyse von Oberflächenfehlern dreidimensionaler Objekte mit einer reflektierenden Oberfläche, insbesondere von Kraftfahrzeugkarosserien, mit den Merkmalen des unabhängigen Patentanspruchs 1, sowie durch eine Vorrichtung zur Durchführung eines solchen Verfahrens mit den Merkmalen des unabhängigen Patentanspruchs 10 gelöst. Weitere vorteilhafte Ausgestaltungen und Weiterbildungen, welche einzeln oder in Kombination miteinander einsetzbar sind, sind Gegenstand der abhängigen Ansprüche.

Das erfindungsgemäße Verfahren sowie die erfindungsgemäße, zur Ausführung des Verfahrens eingerichtete Vorrichtung zeichnen sich dadurch aus, dass Oberflächenfehler anhand der Auswertung wenigstens eines, von wenigstens einer Kamera in Form einer Rastergrafik aus Pixeln aufgezeichneten, Bildes eines, von wenigstens einer ersten Beleuchtungseinrichtung auf wenigstens einen Teil der Oberfläche projizierten, Beleuchtungsmusters anhand eines zweidimensionalen Rasterkoordinatensystems identifiziert werden, wobei
- ein Bereich der aufgezeichneten Oberfläche des Objekts, auf den das Beleuchtungsmuster projiziert ist, innerhalb des oder der aufgezeichneten Bilder identifiziert wird;
- wobei dem identifizierten Bereich ein zweidimensionales Rasterkoordinatensystem mit x- und y- Koordinaten für jeden Pixel zugeordnet wird;
- innerhalb des identifizierten Bereichs ausgehend von einem Nullpunkt des zweidimensionalen Rasterkoordinatensystems wenigstens einem Teil der Pixel Intensitätswerte zugeordnet werden; und
- mittels Kantendetektion ausgehend von zuvor festgelegten Startwerten wenigstens Abschnitte des auf die Oberfläche projizierten Beleuchtungsmusters in dem oder den Bildern identifiziert werden,
- wobei Pixel gleicher oder bis zu einem vorbestimmten Abweichungswert ähnlicher Intensitätswerte als zusammengehörig identifiziert werden;
- wobei anhand einer Gruppe von als zusammengehörig identifizierter Pixel ein funktionaler Zusammenhang für die jeweilige Gruppe von als zusammengehörig identifizierten Pixeln aufgestellt wird;
- wobei wenigstens Abschnitte des auf die Oberfläche projizierten Beleuchtungsmusters in dem oder den Bildern anhand der ersten Ableitung eines gefundenen funktionalen Zusammenhangs, klassifiziert werden;
- und wobei innerhalb des identifizierten Bereichs anhand von charakteristischen Änderungen und/oder einem Wegfall der ersten Ableitung eines gefundenen funktionalen Zusammenhangs in den klassifizierten Abschnitten Oberflächenfehler identifiziert werden.

Die Erfindung ermöglicht vorteilhaft Oberflächenfehler auf der Oberfläche dreidimensionaler Objekte mit einer reflektierenden Oberfläche ausschließlich anhand zweidimensionaler Bildinformationen mit Hilfe von Bildbearbeitungsalgorithmen zu identifizieren. Es werden keine "Umgebungsparameter", wie beispielsweise Abstände zwischen de(r)n Kamera(s) untereinander, aber auch zwischen Kamera(s) und Objekt und/oder dessen Oberfläche benötigt. Zudem kann vorteilhaft auf aufwendige geometrische Berechnungen, insbesondere Triangulationsberechnungen, wie sie beim Stand der Technik regelmäßig Anwendung finden, verzichtet werden. Die erfindungsgemäße Lösung ist dadurch schnell, robust und kann in Zusammenspiel mit einer ganzen Reihe verschieden ausgestalteter erster Beleuchtungseinrichtungen durchgeführt werden, was es insbesondere für mobile Anwendungen, bspw. als ein Handmodul, prädestiniert. Vorteilhafte Ausgestaltungen erhöhen die Robustheit des Verfahrens.

Zusätzliche Einzelheiten und weitere Vorteile der Erfindung werden nachfolgend an Hand bevorzugter Ausführungsbeispiele, auf welche die vorliegende Erfindung jedoch nicht beschränkt ist, und in Verbindung mit der beigefügten Zeichnung beschrieben.

Darin zeigen schematisch:
- Fig. 1: eine Ausgestaltung einer erfindungsgemäßen Vorrichtung zur Erkennung und Analyse von Oberflächenfehlern dreidimensionaler Objekte mit einer reflektierenden Oberfläche mit einer als Beleuchtungsbogen ausgestalteten ersten Beleuchtungseinrichtung in einer perspektivischen Ansicht;
- Fig. 2: eine weitere Ausgestaltung der erfindungsgemäßen Vorrichtung mit einer als Beleuchtungsbogen ausgestalteten ersten Beleuchtungseinrichtung, sowie ein zu untersuchendes dreidimensionales Objekt in einer Frontansicht;
- Fig. 3: einen Teil einer Ausgestaltung einer ersten Beleuchtungseinrichtung mit drei unterschiedlichen Beleuchtungsabschnitten;
- Fig. 4: einen Teil einer Ausgestaltung einer ersten Beleuchtungseinrichtung, sowie das von ihr auf ein dreidimensionales Objekt, hier eine Kraftfahrzeugkarosserie, projizierte Beleuchtungsmuster;
- Fig. 5: eine Rastergrafik eines identifizierten Bereiches eines Teils einer Oberfläche eines dreidimensionalen Objekts, hier eine Motorhaube eines Kraftfahrzeugs;
- Fig. 6: eine Vergrößerung des in Fig. 5 gestrichelt umrahmten Abschnitts der Rastergrafik, darin umrahmt ein Bereich mit Oberflächenfehler (links unten) und ein Bereich ohne Oberflächenfehler, aber Änderung der Struktur der Oberfläche (rechts oben); und
- Fig. 7: eine Vergrößerung des in Fig. 6 gezeigten Bereichs mit Oberflächenfehler (umrahmt links unten) mit einem identifizierten und klassifizierten Oberflächenfehler.

Bei der nachfolgenden Beschreibung bevorzugter Ausfuhrungsformen der vorliegenden Erfindung bezeichnen gleiche Bezugszeichen gleiche oder vergleichbare Komponenten.

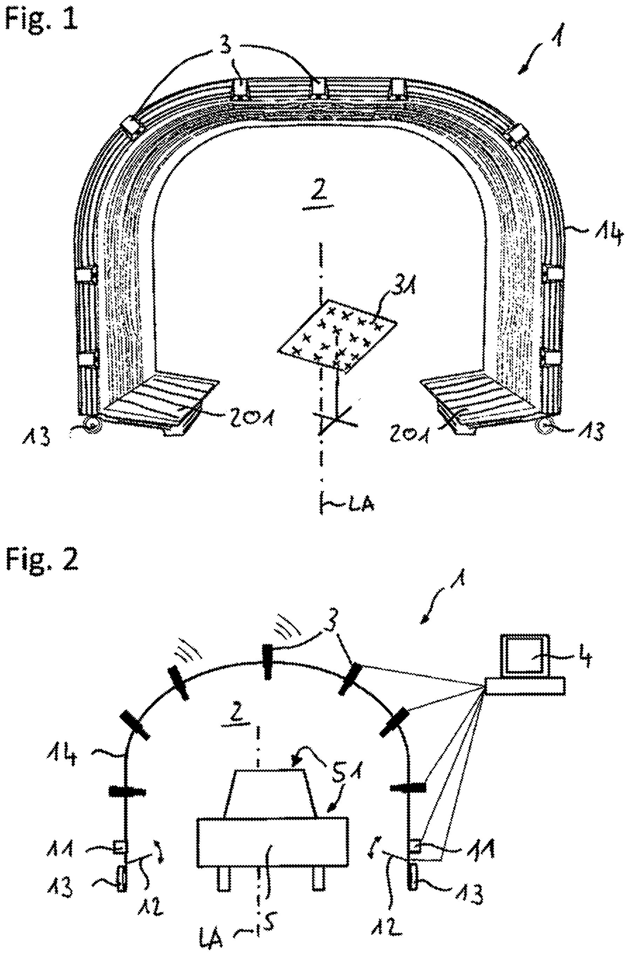

Fig. 1 zeigt eine Ausgestaltung einer erfindungsgemäßen Vorrichtung 1 zur Erkennung und Analyse von Oberflächenfehlern OF dreidimensionaler Objekte 5 mit einer reflektierenden Oberfläche 51 mit einer als Beleuchtungsbogen ausgestalteten ersten Beleuchtungseinrichtung 2 in einer perspektivischen Ansicht.

Die in Fig. 1 beispielhaft gezeigte erfindungsgemäße Vorrichtung 1 zur Erkennung und Analyse von Oberflächenfehlern OF dreidimensionaler Objekte 5 mit einer reflektierenden Oberfläche 51, insbesondere von Kraftfahrzeugkarosserien, umfasst wenigstens eine erste Beleuchtungseinrichtung 2 zur Projektion eines Beleuchtungsmusters 21 auf eine Oberfläche 51 des Objektes 5; eine, insbesondere durch eine Lichtschranke 11 aktivierbare, Kamera 3 zur Aufzeichnung von Bildern in Form einer Rastergrafik aus Pixeln; und eine Steuerungs- und Datenanalyseeinrichtung 4. Sie zeichnet sich dadurch aus, dass die Steuerungs- und Datenanalyseeinrichtung 4 eingerichtet ist, anhand von einem oder mehreren, mittels der Kamera 3 aufgezeichneten Bildern in Form von Rastergrafiken aus Pixeln anhand eines zweidimensionalen Rasterkoordinatensystem Oberflächenfehler OF auf der Oberfläche 51 des Objektes 5 zu identifizieren.

Dabei kann die erste Beleuchtungseinrichtung 2, wie hier dargestellt, durch einen Beleuchtungsbogen mit einem Rahmen 14, vorzugsweise einem Aluminiumrahmen, gebildet sein.

Alternativ dazu kann die erste Beleuchtungseinrichtung 2 auch als Handmodul (nicht dargestellt) ausgestaltet sein, welches vorzugsweise in Form einer tragbaren Lampe, (organischer) Leuchtdioden (LED/OLED), Flüssigkristall- (LCD) oder Plasmaanzeigen gebildet werden kann. Das von der ersten Beleuchtungseinrichtung 2 erzeugte Beleuchtungsmuster 21 kann durch eine regelmäßige Abschattung einer durchgängigen Leuchtfläche erzeugt werden, beispielsweise durch eine an der Leuchtfläche angeordnete entsprechend gestaltete Folie. Alternativ oder kumulativ dazu kann die erste Beleuchtungseinrichtung 2 auch durch wenigstens eine Flüssigkristall- (LCD), (organische) Leuchtdioden (LED/OLED)- oder Plasmaanzeige gebildet werden, welche entweder auch in regelmäßigen Abschnitten abgeschattet und dadurch ein gewünschtes Beleuchtungsmuster 21 erzeugt wird, oder aber ein Beleuchtungsmuster 21 direkt in Form einer Bildprojektion auf die Oberfläche 51 eines dreidimensionalen Objekts 5 projizieren.

Die in Fig. 1 dargestellte Ausgestaltung der Vorrichtung 1 umfasst beispielsweise neun Kameras 3, welche insbesondere an der ersten Beleuchtungseinrichtung 2, vorzugsweise, wie hier dargestellt, an einem Rahmen 14 einer, als ein Beleuchtungsbogen ausgestalteten ersten Beleuchtungseinrichtung 2, angeordnet sind.

Unterhalb der ersten Beleuchtungseinrichtung 2, insbesondere des Beleuchtungsbogens, ist exemplarisch ein Kalibrierungsmittel 31 gezeigt, mit dessen Hilfe, vorzugsweise bei Inbetriebnahme der Vorrichtung 1, vorteilhaft eine Kalibrierung der einen oder mehrerer Kameras 3 vorgenommen werden kann. In Fig. 1 ist hierzu beispielhaft eine Kalibrierungsplatte mit zueinander gleichmäßig beabstandeten Punkten bekannten Abstands als Kalibrierungsmittel 31 dargestellt.

Fig. 2 zeigt eine weitere Ausgestaltung der erfindungsgemäßen Vorrichtung 1 mit einer als Beleuchtungsbogen ausgestalteten ersten Beleuchtungseinrichtung 2, sowie ein zu untersuchendes dreidimensionales Objekt 5 in einer Frontansicht.

In dieser Ausgestaltung der Vorrichtung 1 sind exemplarisch sieben Kameras 3 am Rahmen 14 einer, als ein Beleuchtungsbogen ausgestalteten, ersten Beleuchtungseinrichtung 2, angeordnet. Wie bereits in Fig. 1 gezeigt, kann die erste Beleuchtungseinrichtung 2 wenigstens zwei, bevorzugt vier, Rollen 13 zum Verfahren der ersten Beleuchtungseinrichtung 2 umfassen. Das Vorsehen von Rollen 13 an einer insbesondere als Beleuchtungsbogen ausgestalteten ersten Beleuchtungseinrichtung 2 kann vorteilhaft die Mobilität der Vorrichtung 1 erhöhen. So kann die Vorrichtung 1 beispielsweise mit Hilfe der Rollen 13 auf einfache Weise auf einen Transportanhänger hinauf bzw. von diesem herunter gerollt und zur Benutzung an einem beliebigen Ort aufgestellt werden.

Darüber hinaus kann vorteilhaft auch wenigstens eine Lichtschranke 11 vorgesehen sein, welche in Fig. 2 exemplarisch am Rahmen 14 der ersten Beleuchtungseinrichtung 2 oberhalb der Rollen 13 angeordnet dargestellt ist. Mit Hilfe der Lichtschranke 11 können vorteilhaft die wenigstens eine oder mehrere Kameras 3 aktiviert werden, insbesondere dann, wenn sich ein dreidimensionales Objekt 5, vorzugsweise ein Kraftfahrzeug, durch die erste Beleuchtungseinrichtung 2, insbesondere den Beleuchtungsbogen, hindurchbewegt und dabei die Lichtschranke 11 passiert. Entsprechend kann die Lichtschranke 11 die wenigstens eine oder mehrere Kameras 3 natürlich auch dann aktivieren, wenn das dreidimensionale Objekt 5 steht und sich die Vorrichtung 1, insbesondere die erste Beleuchtungseinrichtung 21, über das Objekt 5 hinwegbewegt. Die Bewegung der Vorrichtung 1 relativ zum Objekt 5 kann dabei bezüglich der Vorrichtung 1 vorteilhaft durch die an der ersten Beleuchtungseinrichtung 2 angeordneten Rollen 13 und bezüglich des dreidimensionalen Objekts 5, insbesondere eines Kraftfahrzeugs durch dessen Eigenantrieb samt Räder realisiert werden. Alternativ oder kumulativ können aber auch Schienen vorgesehenen sein, auf welchen sich die Vorrichtung 1 und/oder das dreidimensionale Objekt 5 bewegt. Mit der Steuer- und Datenanalyseeinrichtung 4 können die eine oder mehreren Kameras 3, die erste 2 und zweite 201 Beleuchtungseinrichtung, sowie die Lichtschranke 11 zudem vorzugsweise über Kabel oder auch drahtlos, beispielweise über eine WLAN- oder Bluetooth-Verbindung, kommunizieren.

Darüber hinaus hat es sich bewährt, wenn die erste Beleuchtungseinrichtung 2, insbesondere der Beleuchtungsbogen, wenigstens einen, bevorzugt - wie in Fig. 2 gezeigt - zwei, Spiegel 12 umfassen, welche vorzugsweise entlang einer Längsachse LA benachbart des Bodens an der Beleuchtungseinrichtung 2 angeordnet sind, wobei der oder die Spiegel 12 bevorzugt verschwenkbar an der Beleuchtungseinrichtung 2 angeordnet sind. Derartige Spiegel 12 ermöglichen es vorteilhaft, dass von der ersten Beleuchtungseinrichtung 2 auf die Oberfläche 51 des dreidimensionalen Objekts 5 projizierte Beleuchtungsmuster 21 durch Spiegelung vorteilhaft auch auf bodennahe und/oder gewölbte Bereiche der Oberfläche 51 zu projizieren, auf denen bei direkter Projektion kein Beleuchtungsmuster 21 abgebildet werden kann.

Alternativ oder kumulativ kann die erste Beleuchtungseinrichtung 2, insbesondere der Beleuchtungsbogen, auch wenigstens eine, bevorzugt zwei, zweite Beleuchtungseinrichtungen 201 umfassen, welche vorzugsweise entlang einer Längsachse LA benachbart des Bodens an der ersten Beleuchtungseinrichtung 2 angeordnet sind, wobei die wenigstens eine zweite Beleuchtungseinrichtung 201 bevorzugt verschwenkbar an der ersten Beleuchtungseinrichtung 2 angeordnet und eingerichtet ist, ein Beleuchtungsmusters 21, insbesondere ein Streifenmuster, auf eine Oberfläche 51 des Objektes 5, insbesondere auf die Oberfläche 51 des Objekts 5 in Bodennähe, zu projizieren. Die eine oder mehrere zweite Beleuchtungseinrichtungen 201 können dabei, wie die eine oder mehrere ersten Beleuchtungseinrichtungen 2, also in Form einer Lampe, (organischer) Leuchtdioden (LED/OLED), Flüssigkristall- (LCD) oder Plasmaanzeigen, ausgestaltet sein und das oder die Beleuchtungsmuster 21 auch auf gleiche Art und Weise wie oben beschrieben erzeugen. Eine oder mehrere derartige zweite Beleuchtungseinrichtungen 201 können, ebenso wie die Spiegel 12, vorteilhaft ermöglichen, ein Beleuchtungsmuster 21 auch auf bodennahe und/oder gewölbte Bereiche der Oberfläche 51 zu projizieren, auf denen bei direkter Projektion kein Beleuchtungsmuster 21 abgebildet werden kann.

Allgemein können verschiedene Wellenlängen, also verschiedenen Farben bis hin zu UV oder Infrarotstrahlen, zur Beleuchtung verwendet werden. Der Typ der einen oder mehreren verwendeten Kameras 3 wird vorzugsweise entsprechend der verwendeten Wellenlänge des Lichts gewählt, also beispielsweise Kameras 3 mit einem CCD-Detektor für sichtbares Licht, UV- und/oder Infrarotlicht.

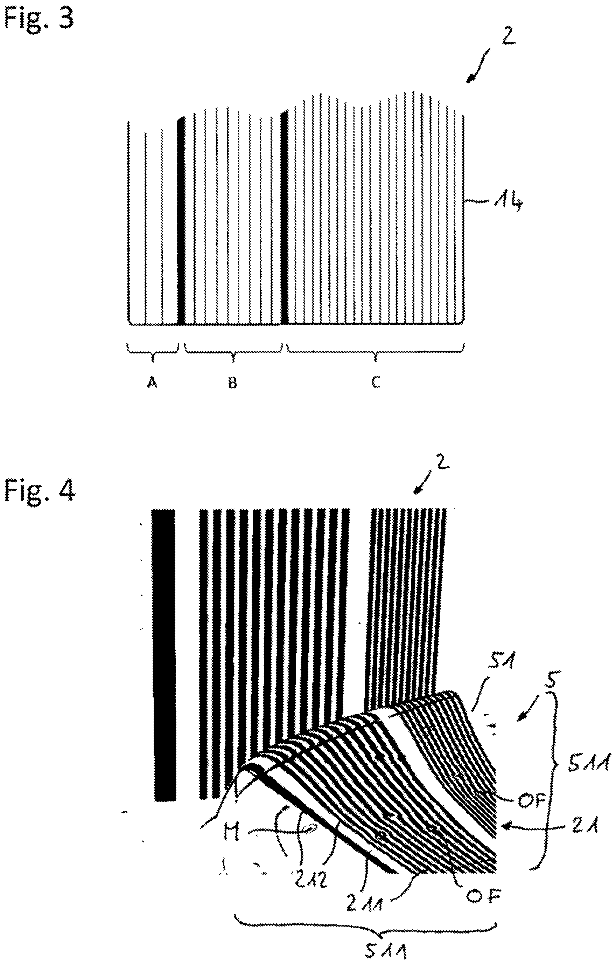

Fig. 3 zeigt einen Teil einer Ausgestaltung einer ersten Beleuchtungseinrichtung 2 mit drei unterschiedlichen Beleuchtungsabschnitten A, B, C. Das dadurch auf der Oberfläche 51 des dreidimensionalen Objekts 5 erzeugte Beleuchtungsmuster 21 weist dementsprechend vorteilhaft ebenfalls drei Beleuchtungsabschnitten A, B, C auf, die sich vorteilhaft in der jeweiligen Streifenbreite voneinander unterscheiden. Beleuchtungsmuster 21, insbesondere Streifenmuster mit kleineren Streifenbreiten, wie sie hier beispielsweise von den Beleuchtungsabschnitten B und C erzeugt werden, eignen sich dabei vorteilhaft für die Erkennung und Analyse von Oberflächenfehlern OF mit kleinerem Durchmesser; wohingegen Beleuchtungsmuster 21, insbesondere Streifenmuster mit vergleichsweise größeren Streifenbreiten, wie sie insbesondere von Beleuchtungsabschnitt A erzeugt werden, sich vorteilhaft für die Erkennung und Analyse von Oberflächenfehlern OF mit größerem Durchmesser eignen.

In Fig. 4 ist ein Teil einer Ausgestaltung einer ersten Beleuchtungseinrichtung 2, sowie das von ihr auf ein dreidimensionales Objekt 5, hier eine Kraftfahrzeugkarosserie, projizierte Beleuchtungsmuster 21 gezeigt.

Durch das erfindungsgemäße Verfahren zur Erkennung und Analyse von Oberflächenfehlern OF dreidimensionaler Objekte 5 mit einer reflektierenden Oberfläche 51, insbesondere von Kraftfahrzeugkarosserien, werden nun Oberflächenfehler OF, wie in Fig. 4 exemplarisch dargestellt, anhand der Auswertung wenigstens eines, von wenigstens einer Kamera 3 in Form einer Rastergrafik aus Pixeln aufgezeichneten, Bildes eines, von wenigstens einer ersten Beleuchtungseinrichtung 2 auf wenigstens einen Teil der Oberfläche 51 projizierten, Beleuchtungsmusters 21 anhand eines zweidimensionalen Rasterkoordinatensystems identifiziert. Dabei kann das Beleuchtungsmuster 21 bevorzugt ein Streifenmuster, insbesondere ein Streifenmuster mit einem sinusartigen Intensitätsverlauf, sein, wobei sich die Streifenbreiten, wie bereits in Fig. 3 gezeigt, abschnittsweise (siehe Beleuchtungsabschnitte A, B, C) voneinander unterscheiden können.

In einer bevorzugten Ausgestaltung der Erfindung kann in einem bevorzugten Verfahrensschritt vorteilhaft mittels wenigstens einer Kamera 3 ein oder mehrere Bilder in Form von Rastergrafiken aus Pixeln, wenigstens eines Teils der Oberfläche 51 des Objekts 5 aufgezeichnet werden. Dazu kann in einem weiteren Verfahrensschritt vorzugsweise, insbesondere nach einer manuellen oder automatisierten Einrichtung des Fokus der einen Kamera 3 oder der mehreren Kameras 3, die (optimale) Belichtungszeit, insbesondere mittels einer Steuer- und Datenanalyseeinrichtung 4, der einen Kamera 3 oder mehrerer Kameras 3 anhand der Farbe der Oberfläche 51 des Objekts 5, insbesondere der Farbe der Kraftfahrzeugkarosserie, bestimmt und eingerichtet werden. Zudem ist es von Vorteil, wenn in einem Verfahrensschritt die eine oder mehreren Kameras 3 mit Hilfe eines Kalibrierungsmittels 31, wie es in Fig. 1 dargestellt ist, kalibriert wird.

Erfindungsgemäß wird nun ein Bereich 511 der aufgezeichneten Oberfläche 51 des Objekts 5, auf den das Beleuchtungsmuster 21 projiziert ist, innerhalb des oder der aufgezeichneten Bilder identifiziert, wobei dem identifizierten Bereich 511 ein zweidimensionales Rasterkoordinatensystem mit x- und y- Koordinaten für jeden Pixel zugeordnet wird.

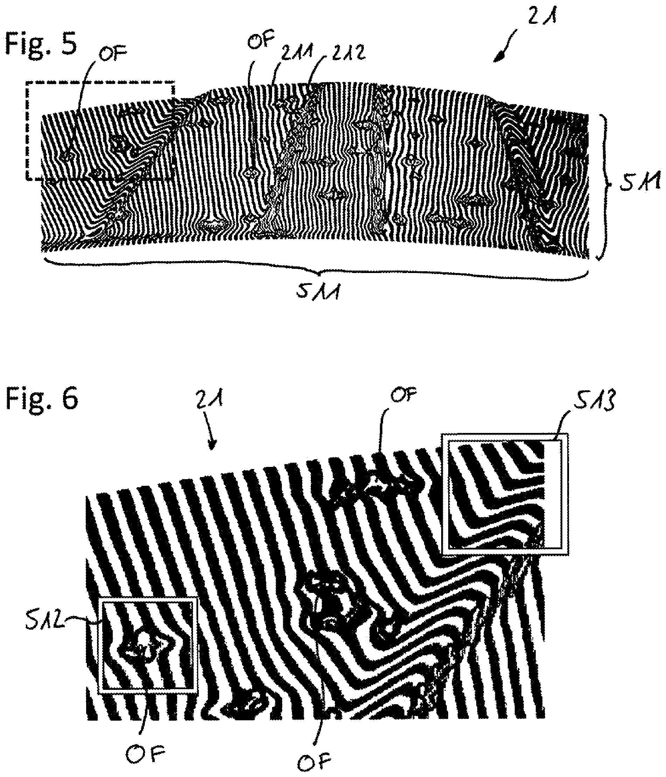

Fig. 5 zeigt beispielhaft eine Rastergrafik eines solchen identifizierten Bereiches 511 eines Teils einer Oberfläche 51 eines dreidimensionalen Objekts 5, hier am Beispiel einer Motorhaube eines Kraftfahrzeugs.

In beiden Figuren (Fig. 4 und Fig. 5) ist zu erkennen, wie sich die Leuchtstreifen 211 und Dunkelstreifen 212 eines beispielhaften Beleuchtungsmusters 21 auf der Oberfläche 51 eines dreidimensionalen Objekts 5, hier einer Kraftfahrzeugkarosserie, abzeichnen.

Sodann wird innerhalb eines identifizierten Bereichs 511 ausgehend von einem Nullpunkt des zweidimensionalen Rasterkoordinatensystems wenigstens einem Teil der Pixel Intensitätswerte, insbesondere Hell-Dunkel-Werte, zugeordnet. Mittels Kantendetektion, ausgehend von zuvor festgelegten Startwerten, werden dann wenigstens Abschnitte des auf die Oberfläche 51 projizierten Beleuchtungsmusters 21, insbesondere die Streifen eines Streifenmusters, in dem oder den Bildern identifiziert, wobei Pixel gleicher oder bis zu einem vorbestimmten Abweichungswert ähnlicher Intensitätswerte, insbesondere Hell-Dunkel-Werte, als zusammengehörig identifiziert werden.

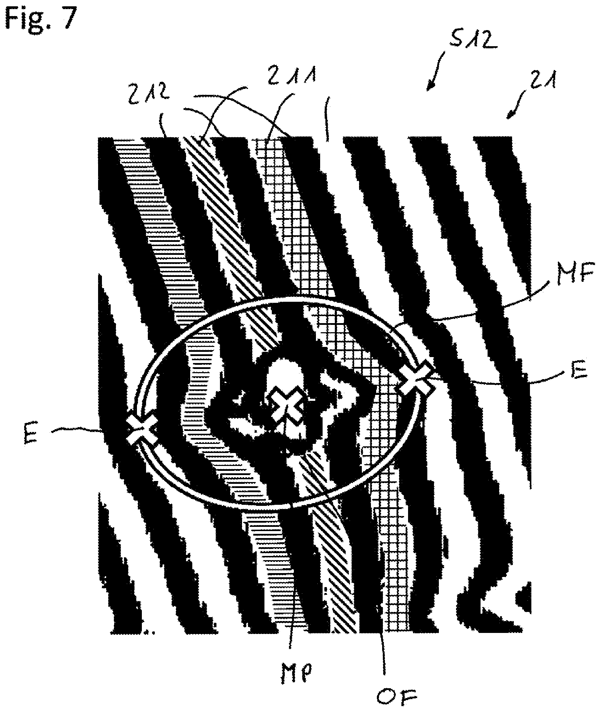

Anhand einer Gruppe von als zusammengehörig identifizierter Pixel wird dann ein funktionaler (mathematischer) Zusammenhang, insbesondere ein Funktionsgraph, für die jeweilige Gruppe von als zusammengehörig identifizierter Pixel aufgestellt. Die unter anderem in den Fig. 5 dargestellten Leuchtstreifen 211 und Dunkelstreifen 212 können dadurch vorteilhaft in Form von mathematischen Kurven, z.B. als Polynom bzw. Spline, angenähert werden. Für ein jedes Pixel einer Gruppe von als zusammengehörig identifizierter Pixel wird dann die erste Ableitung eines gefundenen funktionalen (mathematischen) Zusammenhangs, insbesondere die Steigung eines gefundenen Funktionsgraphen, bestimmt und wenigstens Abschnitte des auf die Oberfläche 51 projizierten Beleuchtungsmusters 21, insbesondere die Streifen eines Streifenmusters, in dem oder den Bildern anhand der erste Ableitung eines gefundenen funktionalen (mathematischen) Zusammenhangs, insbesondere anhand einer Steigung des Funktionsgraphen, klassifiziert. In Fig. 7 sind beispielhaft drei derart klassifizierte Leuchtstreifen 211 (waagrecht schraffiert, diagonal schraffiert und kariert schraffiert) dargestellt, wobei jede Schraffur beispielsweise einer speziellen Steigung vorzugsweise innerhalb eines vorgegebenen Bereichs im Sinne einer "Nachbarschaftsanalyse", entspricht.

Innerhalb des identifizierten Bereichs 511 werden schließlich anhand von charakteristischen Änderungen und/oder einem Wegfall der ersten Ableitung eines gefundenen funktionalen (mathematischen) Zusammenhangs, insbesondere der Steigung eines Funktionsgraphen, in den klassifizierten Abschnitten, insbesondere in den Streifen eines Streifenmusters, Oberflächenfehler OF identifiziert.

Fig. 6 zeigt dazu eine Vergrößerung des in Fig. 5 gestrichelt umrahmten Abschnitts der Rastergrafik, darin wiederum umrahmt ein Bereich 512 mit Oberflächenfehler OF (links unten) und ein Bereich 513 ohne Oberflächenfehler OF, aber Änderung der Struktur der Oberfläche 51 (rechts oben), wobei Fig. 7 schließlich eine Vergrößerung des in Fig. 6 gezeigten Bereichs 512 mit Oberflächenfehler OF (umrahmt links unten) mit einem identifizierten und klassifizierten Oberflächenfehler OF zeigt.

In Fig. 7 sind derartige charakteristischen Änderungen und/oder ein Wegfall der ersten Ableitung eines gefundenen funktionalen (mathematischen) Zusammenhangs anhand der schraffierten Leuchtstreifen 211 gut zu erkennen. Im hier dargestellten Beispiel ändern sich die ersten Ableitungen, insbesondere die Steigungen, des waagrecht schraffierten und des karierten Streifens in einem zueinander benachbarten Abschnitt des identifizierten Bereichs 511 in charakteristischer Weise, wobei die Krümmungen des waagrecht schraffierten und des karierten Streifens einander entgegengesetzt sind. Der diagonal schraffierte Leuchtstreifen 211 bricht in einem ebenfalls benachbarten, zwischen den beiden anderen schraffierten Leuchtstreifen 211 liegenden, Abschnitt des identifizierten Bereichs 511 sogar völlig ab, die erste Ableitung eines hierfür gefundenen funktionalen (mathematischen) Zusammenhangs, fiele demnach weg. Der Wegfall einzelner Streifen kann demnach vorteilhaft als ein Kriterium zur Identifizierung von Oberflächenfehlern OF genutzt werden.

Im Gegensatz dazu führen Strukturänderungen in der Oberfläche 51 eines dreidimensionalen Objekts 5, wie beispielsweise Kanten oder Knicke in der Motorhaube einer Kraftfahrzeugkarosserie, nicht zu einem solchen Muster, insbesondere nicht zu einem Wegfall der erste Ableitung eines gefundenen funktionalen (mathematischen) Zusammenhangs, insbesondere der Steigung eines Funktionsgraphen, und damit zu einer vollständigen Unterbrechung eines Leuchtstreifens 211, sondern lediglich, wie in Fig. 6 in dem umrahmten Bereich 513 gezeigt, zu gleichartigen Änderungen der ersten Ableitung eines gefundenen funktionalen (mathematischen) Zusammenhangs, vorzugsweise der Steigung eines Funktionsgraphen, insbesondere mit einer gleichartigen (gleichsinnigen) Krümmung.

In einem weiteren bevorzugten Verfahrensschritt kann zudem vorteilhaft die Größe einzelner identifizierter Oberflächenfehler OF vorzugsweise durch Bestimmung eines Mittelpunkts des jeweiligen Oberflächenfehlers OF und wenigstens eines vom Mittelpunkt MP beabstandeten Extremums E ermittelt werden. Dazu kann insbesondere eine Modelfunktion MF, z. B. eine Kreis- oder Ellipsenfunktion, ausgehend vom Mittelpunkt MP und dem Abstand zwischen Mittelpunkt MP und einem Extremum E als Radius berechnet und vorzugsweise in die jeweilige Rastergrafik projiziert werden, um die Größe des jeweiligen Oberflächenfehler OF im Bild oder in den Bildern darzustellen. Als Extremum E kann hierbei beispielweise das Maximum bzw. Minimum eines gefundenen Funktionsgraphen verwendet werden.

In einer weiteren bevorzugten Ausgestaltung der Erfindung, kann in einem Verfahrensschritt die wenigstens eine Beleuchtungseinrichtung 2 und/oder die wenigstens eine Kamera 3 relativ zum dreidimensionalen Objekt (5) bewegt werden. Alternativ dazu kann auch das dreidimensionale Objekt 5 relativ zur wenigstens einen Beleuchtungseinrichtung 2 und/oder zur wenigstens einen Kamera 3 bewegt werden. Beispielsweise kann ein Kraftfahrzeug durch eine, als Beleuchtungsbogen ausgestaltete erste Beleuchtungseinrichtung hindurch fahren. Zur Erkennung und Analyse von Oberflächenfehlern OF können hierbei dann bevorzugt mehrere Bilder, insbesondere mehrere Bilder von mehreren Kameras 3 aufgezeichnet werden. In einer weiteren Ausgestaltung der Erfindung hat sich dabei bewährt, wenn in einem Verfahrensschritt auf der Oberfläche 51 des Objekts 5 wenigstens ein Marker M, insbesondere vier Marker M, angeordnet und innerhalb des oder der aufgezeichneten Bilder die Position des oder der Marker M bestimmt wird. Die Bestimmung der Position von einem oder mehreren Markern M innerhalb verschiedener aufgezeichneter Bilder kann vorteilhaft, vorzugsweise vor Beginn einer weiteren Oberflächenanalyse, zur Kombination von mehreren Bildern in ein zweidimensionales Rasterkoordinatensystem dienen, insbesondere dann, wenn das zu untersuchende Objekt 5, beziehungsweise dessen Oberfläche 51, größer als das auf die Oberfläche 51 des Objekts 5 projizierte Beleuchtungsmuster 21 ist. In diesem Fall und/oder im Fall der Relativbewegung des Objekts 5 bezüglich der Vorrichtung 1 oder umgekehrt werden vorteilhaft mehrere Bilder, insbesondere auch von mehreren Kameras 3 aufgezeichnet, welche dann aufgrund einer Positionsinformation wenigstens eines Markers M in den verschiedenen Bildern miteinander vorteilhaft in einem Rasterkoordinatensystem kombiniert werden können.

Schließlich ist es bevorzugt, wenn in einem Verfahrensschritt identifizierte Oberflächenfehler OF durch einen Vergleich mit wenigstens einer Modelfunktion MF, insbesondere mit einer Kreisfunktion und/oder Ellipsenfunktion, und/oder einem Muster von bereits klassifizierten Oberflächenfehlern OF, charakteristischen Änderungen und/oder einem Wegfall der erste Ableitung eines bereits gefundenen funktionalen (mathematischen) Zusammenhangs klassifiziert werden, und die Mess- und/oder Auswertungsdaten derart klassifizierter Oberflächenfehler OF in einer Datenbank, insbesondere in einer Cloud-Datenbank, gespeichert werden. Alternativ oder kumulativ dazu können identifizierte Oberflächenfehler OF auch durch einen Vergleich mit Datenbankeinträgen, insbesondere mit Datenbankeinträgen einer Datenbank mit Mess- und/oder Auswertungsdaten bereits klassifizierter Oberflächenfehler OF, klassifiziert werden, und Mess- und/oder Auswertungsdaten klassifizierter Oberflächenfehler OF in einer Datenbank, insbesondere in einer Cloud-Datenbank, gespeichert werden. Dies ermöglicht vorteilhaft die Erkennung und Analyse von Oberflächenfehlern OF dreidimensionaler Objekte 5 mit reflektierender Oberfläche 51 nach jeder durchgeführten Analyse zu verbessern und im Sinne einer "deep learning" bzw. "machine learning" -Strategie, die Performance des erfindungsgemäßen Verfahrens beziehungsweise der erfindungsgemäßen Vorrichtung 1 automatisch zu optimieren.

Die vorliegende Erfindung betrifft ein Verfahren zur Erkennung und Analyse von Oberflächenfehlern OF dreidimensionaler Objekte 5 mit einer reflektierenden Oberfläche 51, insbesondere von Kraftfahrzeugkarosserien, bei dem die Oberflächenfehler OF anhand der Auswertung wenigstens eines, von wenigstens einer Kamera 3 in Form einer Rastergrafik aus Pixeln aufgezeichneten, Bildes eines, von wenigstens einer ersten Beleuchtungseinrichtung 2 auf wenigstens einen Teil der Oberfläche 51 projizierten, Beleuchtungsmusters 21 anhand eines zweidimensionalen Rasterkoordinatensystems identifiziert werden, sowie eine Vorrichtung 1 hierfür. Sie ermöglicht vorteilhaft Oberflächenfehler OF ausschließlich anhand zweidimensionaler Bildinformationen mit Hilfe von Bildbearbeitungsalgorithmen zu identifizieren, wobei keine "Umgebungsparameter", benötigt werden und vorteilhaft auf aufwendige geometrische Berechnungen verzichtet werden kann. Die erfindungsgemäße Lösung ist dadurch schnell, robust und kann in Zusammenspiel verschieden ausgestalteten ersten Beleuchtungseinrichtungen 2 durchgeführt werden, was es insbesondere für mobile Anwendungen, bspw. als ein Handmodul, prädestiniert. Darüber hinaus wird ermöglicht, das erfindungsgemäße Verfahren durch eine "deep learning" Strategie zu optimieren.

### Bezugszeichenliste

- 1: Vorrichtung
11 Lichtschranke
12 Spiegel
13 Rollen
14 Rahmen
- 2: Erste Beleuchtungseinrichtung
21 Beleuchtungsmuster
211 Leuchtstreifen
212 Dunkelstreifen
- 201: Zweite Beleuchtungseinrichtung
- 3: Kamera
31 Kalibrierungsmittel
- 4: Steuerungs- und Datenanalyseeinrichtung
- 5: Objekt, insbesondere Kraftfahrzeugkarosserie
51 Oberfläche
511 Bereich
512 Bereich mit Oberflächenfehler (OF)
513 Bereich ohne Oberflächenfehler (OF), aber Änderung der Struktur der Oberfläche (51)
- A: erster Beleuchtungsabschnitt
- B: zweiter Beleuchtungsabschnitt
- C: dritter Beleuchtungsabschnitt
- LA: Längsachse
- M: Marker
- OF: Oberflächenfehler
- MF: Modelfunktion
- MP: Mittelpunkt
- E: Extremum

## Patentansprüche

1. Verfahren zur Erkennung und Analyse von Oberflächenfehlern (OF) dreidimensionaler Objekte (5) mit einer reflektierenden Oberfläche (51), insbesondere von Kraftfahrzeugkarosserien, bei dem die Oberflächenfehler (OF) anhand der Auswertung wenigstens eines, von wenigstens einer Kamera (3) in Form einer Rastergrafik aus Pixeln aufgezeichneten, Bildes eines, von wenigstens einer ersten Beleuchtungseinrichtung (2) auf wenigstens einen Teil der Oberfläche (51) projizierten, Beleuchtungsmusters (21) anhand eines zweidimensionalen Rasterkoordinatensystems identifiziert werden, wobei
- ein Bereich (511) der aufgezeichneten Oberfläche (51) des Objekts (5), auf den das Beleuchtungsmuster (21) projiziert ist, innerhalb des oder der aufgezeichneten Bilder identifiziert wird;
- wobei dem identifizierten Bereich (511) ein zweidimensionales Rasterkoordinatensystem mit x- und y- Koordinaten für jeden Pixel zugeordnet wird;
- innerhalb des identifizierten Bereichs (511) ausgehend von einem Nullpunkt des zweidimensionalen Rasterkoordinatensystems wenigstens einem Teil der Pixel Intensitätswerte zugeordnet werden; und
- mittels Kantendetektion ausgehend von zuvor festgelegten Startwerten wenigstens Abschnitte des auf die Oberfläche (51) projizierten Beleuchtungsmusters (21) in dem oder den Bildern identifiziert werden,
- wobei Pixel gleicher oder bis zu einem vorbestimmten Abweichungswert ähnlicher Intensitätswerte als zusammengehörig identifiziert werden;
- wobei anhand einer Gruppe von als zusammengehörig identifizierter Pixel ein funktionaler Zusammenhang für die jeweilige Gruppe von als zusammengehörig identifizierten Pixeln aufgestellt wird;
- wobei wenigstens Abschnitte des auf die Oberfläche (51) projizierten Beleuchtungsmusters (21) in dem oder den Bildern anhand der ersten Ableitung eines gefundenen funktionalen Zusammenhangs klassifiziert werden;
- und wobei innerhalb des identifizierten Bereichs (511) anhand von charakteristischen Änderungen und/oder einem Wegfall der ersten Ableitung eines gefundenen funktionalen Zusammenhangs in den klassifizierten Abschnitten Oberflächenfehler (OF) identifiziert werden.

2. Verfahren nach Anspruch 1, bei dem das Beleuchtungsmuster (21) ein Streifenmuster, insbesondere ein Streifenmuster mit einem sinusartigen Intensitätsverlauf, ist.

3. Verfahren nach Anspruch 1 oder 2, bei dem mittels wenigstens einer Kamera (3) ein oder mehrere Bilder in Form von Rastergrafiken aus Pixeln, wenigstens eines Teils der Oberfläche (51) des Objekts (5) aufgezeichnet wird,
- wobei vorzugsweise, insbesondere nach einer manuellen oder automatisierten Einrichtung des Fokus der einen Kamera (3) oder der mehreren Kameras (3), die (optimale) Belichtungszeit, insbesondere mittels einer Steuer- und Datenanalyseeinrichtung (4), der einen Kamera (3) oder mehrerer Kameras (3) anhand der Farbe der Oberfläche (51) des Objekts (5), insbesondere der Farbe der Kraftfahrzeugkarosserie, bestimmt und eingerichtet wird; und/oder
- wobei die eine oder mehrere Kameras (3) mit Hilfe eines Kalibrierungsmittels (31) kalibriert wird.

4. Verfahren nach einem oder mehreren der vorherigen Ansprüche, bei dem
- innerhalb des identifizierten Bereichs (511) ausgehend von einem Nullpunkt des zweidimensionalen Rasterkoordinatensystems wenigstens einem Teil der Pixel Hell-Dunkel-Werte zugeordnet werden; und bei dem
- mittels Kantendetektion ausgehend von zuvor festgelegten Startwerten wenigstens Abschnitte des auf die Oberfläche (51) projizierten Beleuchtungsmusters (21), insbesondere die Streifen eines Streifenmusters, in dem oder den Bildern identifiziert werden,
- wobei Pixel gleicher oder bis zu einem vorbestimmten Abweichungswert ähnlicher Hell-Dunkel-Werte als zusammengehörig identifiziert werden.

5. Verfahren nach einem oder mehreren der vorherigen Ansprüche, bei dem für ein jedes Pixel einer Gruppe von als zusammengehörig identifizierter Pixel, die erste Ableitung eines gefundenen funktionalen Zusammenhangs, insbesondere die Steigung eines gefundenen Funktionsgraphen, bestimmt wird.

6. Verfahren nach einem oder mehreren der vorherigen Ansprüche, bei dem die Größe einzelner identifizierter Oberflächenfehler (OF) durch Bestimmung eines Mittelpunkts des jeweiligen Oberflächenfehlers (OF) und wenigstens eines vom Mittelpunkt (MP) beabstandeten Extremums (E) ermittelt wird.

7. Verfahren nach einem oder mehreren der vorherigen Ansprüche, bei dem auf der Oberfläche (51) des Objekts (5) wenigstens ein Marker (M), insbesondere vier Marker (M), angeordnet und innerhalb des oder der aufgezeichneten Bilder die Position des oder der Marker (M) bestimmt wird.

8. Verfahren nach einem oder mehreren der vorherigen Ansprüche, bei dem
- die wenigstens eine Beleuchtungseinrichtung (2) und/oder die wenigstens eine Kamera (3) relativ zum dreidimensionalen Objekt (5) bewegt wird; oder
- bei dem das dreidimensionale Objekt (5) relativ zur wenigstens einen Beleuchtungseinrichtung (2) und/oder zur wenigstens einen Kamera (3) bewegt wird.

9. Verfahren nach einem oder mehreren der vorherigen Ansprüche, bei dem,
- identifizierte Oberflächenfehler (OF) durch einen Vergleich mit wenigstens einer Modelfunktion (MF), insbesondere mit einer Kreisfunktion und/oder Ellipsenfunktion, und/oder einem Muster von bereits klassifizierten Oberflächenfehlern (OF), charakteristischen Änderungen und/oder einem Wegfall der erste Ableitung eines bereits gefundenen funktionalen (mathematischen) Zusammenhangs klassifiziert werden, und die Mess- und/oder Auswertungsdaten derart klassifizierter Oberflächenfehler (OF) in einer Datenbank, insbesondere in einer Cloud-Datenbank, gespeichert werden; und/oder
- dass identifizierte Oberflächenfehler (OF) durch einen Vergleich mit Datenbankeinträgen, insbesondere mit Datenbankeinträgen einer Datenbank mit Mess- und/oder Auswertungsdaten bereits klassifizierter Oberflächenfehler (OF), klassifiziert werden, und Mess- und/oder Auswertungsdaten klassifizierter Oberflächenfehler (OF) in einer Datenbank, insbesondere in einer Cloud-Datenbank, gespeichert werden.

10. Vorrichtung (1) zur Erkennung und Analyse von Oberflächenfehlern (OF) dreidimensionaler Objekte (5) mit einer reflektierenden Oberfläche (51), insbesondere von Kraftfahrzeugkarosserien, insbesondere nach einem Verfahren gemäß einem oder mehreren der Ansprüche 1 bis 9,
wenigstens umfassend:
- eine erste Beleuchtungseinrichtung (2), insbesondere einen Beleuchtungsbogen oder ein Handmodul, zur Projektion eines Beleuchtungsmusters (21) auf eine Oberfläche (51) des Objektes (5);
- eine, insbesondere durch eine Lichtschranke (11) aktivierbare, Kamera (3) zur Aufzeichnung von Bildern in Form einer Rastergrafik aus Pixeln; und
- eine Steuerungs- und Datenanalyseeinrichtung (4);
**dadurch gekennzeichnet, dass**
- die Steuerungs- und Datenanalyseeinrichtung (4) eingerichtet ist, anhand von einem oder mehreren, mittels der Kamera (3) aufgezeichneten Bildern in Form von Rastergrafiken aus Pixeln anhand eines zweidimensionalen Rasterkoordinatensystem Oberflächenfehler (OF) auf der Oberfläche (51) des Objektes (5) zu identifizieren, wobei
- ein Bereich (511) der aufgezeichneten Oberfläche (51) des Objekts (5), auf den das Beleuchtungsmuster (21) projiziert ist, innerhalb des oder der aufgezeichneten Bilder identifiziert wird;
- wobei dem identifizierten Bereich (511) ein zweidimensionales Rasterkoordinatensystem mit x- und y- Koordinaten für jeden Pixel zugeordnet wird;
- innerhalb des identifizierten Bereichs (511) ausgehend von einem Nullpunkt des zweidimensionalen Rasterkoordinatensystems wenigstens einem Teil der Pixel Intensitätswerte zugeordnet werden; und
- mittels Kantendetektion ausgehend von zuvor festgelegten Startwerten wenigstens Abschnitte des auf die Oberfläche (51) projizierten Beleuchtungsmusters (21) in dem oder den Bildern identifiziert werden,
- wobei Pixel gleicher oder bis zu einem vorbestimmten Abweichungswert ähnlicher Intensitätswerte als zusammengehörig identifiziert werden;
- wobei anhand einer Gruppe von als zusammengehörig identifizierter Pixel ein funktionaler Zusammenhang für die jeweilige Gruppe von als zusammengehörig identifizierten Pixeln aufgestellt wird;
- wobei wenigstens Abschnitte des auf die Oberfläche (51) projizierten Beleuchtungsmusters (21) in dem oder den Bildern anhand der ersten Ableitung eines gefundenen funktionalen Zusammenhangs klassifiziert werden;
- und wobei innerhalb des identifizierten Bereichs (511) anhand von charakteristischen Änderungen und/oder einem Wegfall der ersten Ableitung eines gefundenen funktionalen Zusammenhangs in den klassifizierten Abschnitten Oberflächenfehler (OF) identifiziert werden.

11. Vorrichtung (1) nach Anspruch 10, insbesondere mit einer als, auf wenigstens zwei oder bevorzugt vier Rollen (13) verfahrbaren, Beleuchtungsbogen ausgestalteten ersten Beleuchtungseinrichtung (2), **dadurch gekennzeichnet,**
- **dass** die erste Beleuchtungseinrichtung (2), insbesondere der Beleuchtungsbogen, wenigstens einen, bevorzugt zwei, Spiegel (12) umfasst, welcher vorzugsweise entlang einer Längsachse (LA) benachbart des Bodens an der ersten Beleuchtungseinrichtung (2) angeordnet ist,
- wobei der wenigstens eine Spiegel (12) bevorzugt verschwenkbar an der ersten Beleuchtungseinrichtung (2) angeordnet und eingerichtet ist, ein Beleuchtungsmuster (21), insbesondere ein Streifenmuster, der ersten Beleuchtungseinrichtung (2) auf eine Oberfläche (51) des Objektes (5), insbesondere auf die Oberfläche (51) des Objekts (5) in Bodennähe, durch Spiegelung zu projizieren;
und/oder
- **dass** die erste Beleuchtungseinrichtung (2), insbesondere der Beleuchtungsbogen, wenigstens eine, bevorzugt zwei, zweite Beleuchtungseinrichtung (201) umfasst, welche vorzugsweise entlang einer Längsachse (LA) benachbart des Bodens an der ersten Beleuchtungseinrichtung (2) angeordnet ist,
- wobei die wenigstens eine zweite Beleuchtungseinrichtung (201) bevorzugt verschwenkbar an der ersten Beleuchtungseinrichtung (2) angeordnet und eingerichtet ist, ein Beleuchtungsmusters (21), insbesondere ein Streifenmuster, auf eine Oberfläche (51) des Objektes (5), insbesondere auf die Oberfläche (51) des Objekts (5) in Bodennähe, zu projizieren.

## Claims

1. A method for recognizing and analyzing surface defects (OF) in three-dimensional objects (5) having a reflective surface (51), in particular motor vehicle bodies, in which the surface defects (OF) are identified on the basis of the evaluation of at least one image recorded by at least one camera (3) in the form of a grid graphic made up of pixels of an illumination pattern (21) projected by at least one first illumination unit (2) on at least a part of the surface (51) on the basis of a two-dimensional grid coordinate system, wherein
- a region (511) of the recorded surface (51) of the object (5), on which the illumination pattern (21) is projected, within the recorded image or images is identified;
- wherein a two-dimensional grid coordinate system having x an y coordinates for each pixel is associated with the identified region (511);
- within said identified region (511), intensity values are assigned to at least a part of the pixels starting from a zero point of the two-dimensional grid coordinate system; and
- by means of edge detection, starting from previously defined starting values, at least sections of the illumination pattern (21) projected on the surface (51) are identified in the image or the images,
- wherein pixels having intensity values which are equal or similar up to a predetermined deviation value are identified as associated;
- wherein on the basis of a group of pixels identified as associated, a functional relationship is produced for the respective group of pixels identified as associated;
- wherein at least sections of the illumination pattern (21) projected on the surface (51) in the image or the images are classified on the basis of the first derivative of a found functional relationship;
- and wherein surface defects (OF) are identified within the identified region (511) on the basis of characteristic changes and/or a disappearance of the first derivative of a found functional relationship in the classified sections.

2. The method as claimed in claim 1, in which the illumination pattern (21) is a stripe pattern, in particular a stripe pattern having a sinusoidal intensity curve.

3. The method as claimed in claim 1 or 2, in which one or more images in the form of grid graphics made up of pixels of at least a part of the surface (51) of the object (5) are recorded by means of at least one camera (3),
- wherein preferably, in particular after a manual or automatic configuration of the focus of the one camera (3) or the multiple cameras (3), the (optimum) exposure time is determined and configured, in particular by means of a control and data analysis unit (4), of the one camera (3) or the multiple cameras (3) on the basis of the color of the surface (51) of the object (5), in particular the color of the motor vehicle body; and/or
- wherein the one or more cameras (3) are calibrated with the aid of a calibration means (31) .

4. The method as claimed in one or more of the preceding claims, in which
- within said identified region (511), light-dark values are assigned to at least a part of the pixels starting from a zero point of the two-dimensional grid coordinate system; and in which
- by means of edge detection, starting from previously defined starting values, at least sections of the illumination pattern (21) projected on the surface (51), in particular the stripes of a stripe pattern, are identified in the image or the images,
- wherein pixels having light-dark values which are equal or similar up to a predetermined deviation valueare identified as associated.

5. The method as claimed in one or more of the preceding claims, in which, for each pixel of a group of pixels identified as associated, the first derivative of a found functional relationship, in particular the slope of a found function graph, is determined.

6. The method as claimed in one or more of the preceding claims, in which the size of individual identified surface defects (OF) is ascertained by determining a center point of the respective surface defect (OF) and at least one extremum (E) spaced apart from the center point (MP).

7. The method as claimed in one or more of the preceding claims, in which at least one marker (M), in particular four markers (M) are arranged on the surface (51) of the object (5) and the position of the marker or markers (M) is determined within the recorded image or images.

8. The method as claimed in one or more of the preceding claims, in which
- the at least one illumination unit (2) and/or the at least one camera (3) is moved in relation to the three-dimensional object (5); or
- in which the three-dimensional object (5) is moved in relation to the at least one illumination unit (2) and/or the at least one camera (3).

9. The method as claimed in one or more of the preceding claims, in which
- identified surface defects (OF) are classified by a comparison to at least one model function (MF), in particular to a circle function and/or ellipse function, and/or a pattern of already classified surface defects (OF), characteristic changes, and/or a disappearance of the first derivative of an already found functional relationship, and the measurement and/or evaluation data of surface defects (OF) classified in such a way are stored in a database, in particular in a cloud database; and/or
- identified surface defects (OF) are classified by a comparison to database entries, in particular to database entries of a database having measurement and/or evaluation data of already classified surface defects (OF), and measurement and/or evaluation data of classified surface defects (OF) are stored in a database, in particular in a cloud database.

10. A device (1) for recognizing and analyzing surface defects (OF) in three-dimensional objects (5) having a reflective surface (51), in particular motor vehicle bodies, in particular according to a method as claimed in one or more of claims 1 to 9,
at least comprising:
- a first illumination unit (2), in particular an illumination arch or a handheld module, for projecting an illumination pattern (21) on a surface (51) of the object (5);
- a camera (3), which is activatable in particular by a light barrier (11), for recording images in the form of a grid graphic made up of pixels; and
- a control and data analysis unit (4);
**characterized in that**
- the control and data analysis unit (4) is configured to identify surface defects (OF) on the surface (51) of the object (5) on the basis of one or more images recorded by means of the camera (3) in the form of grid graphics made up of pixels on the basis of a two-dimensional grid coordinate system, wherein
- a region (511) of the recorded surface (51) of the object (5), on which the illumination pattern (21) is projected, within the recorded image or images is identified;
- wherein a two-dimensional grid coordinate system having x an y coordinates for each pixel is associated with the identified region (511);
- within said identified region (511), intensity values are assigned to at least a part of the pixels starting from a zero point of the two-dimensional grid coordinate system; and
- by means of edge detection, starting from previously defined starting values, at least sections of the illumination pattern (21) projected on the surface (51) are identified in the image or the images,
- wherein pixels having intensity values which are equal or similar up to a predetermined deviation value are identified as associated;
- wherein on the basis of a group of pixels identified as associated, a functional relationship is produced for the respective group of pixels identified as associated;
- wherein at least sections of the illumination pattern (21) projected on the surface (51) in the image or the images are classified on the basis of the first derivative of a found functional relationship;
- and wherein surface defects (OF) are identified within the identified region (511) on the basis of characteristic changes and/or a disappearance of the first derivative of a found functional relationship in the classified sections.

11. The device (1) as claimed in claim 10, in particular having a first illumination unit (2) designed as an illumination arch movable on at least two or preferably four rollers (13), **characterized in that**
- the first illumination unit (2), in particular the illumination arch, comprises at least one, preferably two mirrors (12), which are preferably arranged along a longitudinal axis (LA) adjacent to the floor on the first illumination unit (2),
- wherein the at least one mirror (12) is preferably arranged pivotably on the first illumination unit (2) and is configured to project by reflection an illumination pattern (21), in particular a stripe pattern, of the first illumination unit (2) on a surface (51) of the object (5), in particular on the surface (51) of the object (5) in the vicinity of the floor;
and/or
- the first illumination unit (2), in particular the illumination arch, comprises at least one, preferably two, second illumination units (201), which are preferably arranged along a longitudinal axis (LA) adjacent to the floor on the first illumination unit (2),
- wherein the at least one second illumination unit (201) is preferably arranged pivotably on the first illumination unit (2) and is configured to project an illumination pattern (21), in particular a stripe pattern, on a surface (51) of the object (5), in particular on the surface (51) of the object (5) in the vicinity of the floor.

## Revendications

1. Procédé de reconnaissance et d'analyse de défauts de surface (OF) d'objets tridimensionnels (5) comprenant une surface réfléchissante (51), notamment de carrosseries de véhicule, avec lequel les défauts de surface (OF) sont identifiés à l'aide de l'interprétation d'au moins une image, enregistrée par au moins une caméra (3) sous la forme d'un graphique matriciel constitué de pixels, d'un motif d'éclairage (21), projeté par au moins un premier dispositif d'éclairage (2) sur au moins une partie de la surface (51), à l'aide d'un système de coordonnées en grille bidimensionnel,
- une zone (511) de la surface (51) enregistrée de l'objet (5) sur laquelle est projeté le motif d'éclairage (21) étant identifiée à l'intérieur de la ou des images enregistrées ;
- un système de coordonnées en grille bidimensionnel avec des coordonnées x et y pour chaque pixel étant attribué à la zone (511) identifiée ;
- à l'intérieur de la zone (511) identifiée, à partir d'un point zéro du système de coordonnées en grille bidimensionnel, des valeurs d'intensité étant attribuées à au moins une partie des pixels ; et
- au moins des portions du motif d'éclairage (21) projeté sur la surface (51) étant identifiées dans la ou les images au moyen de la détection des contours en partant de valeurs de départ préalablement spécifiées,
- les pixels ayant des valeurs d'intensité égales ou similaires jusqu'à une valeur d'écart prédéterminée étant identifiés comme associés ;
- une relation fonctionnelle pour le groupe respectif de pixels identifiés comme associés étant établie à l'aide d'un groupe de pixels identifiés comme associés ;
- au moins des portions du motif d'éclairage (21) projeté sur la surface (51) dans la ou les images étant classifiées à l'aide de la première dérivée d'une relation fonctionnelle trouvée ;
- et des défauts de surface (OF) étant identifiés à l'intérieur de la zone (511) identifiée dans les portions classifiées à l'aide de modifications caractéristiques et/ou d'une suppression de la première dérivée d'une relation fonctionnelle trouvée.

2. Procédé selon la revendication 1, avec lequel le motif d'éclairage (21) est un motif à bandes, notamment un motif à bandes ayant une courbe d'intensité sinusoïdale.

3. Procédé selon la revendication 1 ou 2, avec lequel une ou plusieurs images d'au moins une partie de la surface (51) de l'objet (5) sont enregistrées sous la forme de graphiques matriciels constitués de pixels au moyen d'au moins une caméra (3),
- le temps d'exposition (optimal) de ladite caméra (3) ou des plusieurs caméras (3) étant de préférence déterminé et réglé, notamment après un réglage manuel ou automatisé de la mise au moins de ladite caméra (3) ou des plusieurs caméras (3), notamment au moyen d'un dispositif de commande et d'analyse de données (4), à l'aide de la couleur de la surface (51) de l'objet (5), notamment de la couleur de la carrosserie de véhicule ; et/ou
- ladite ou les plusieurs caméras (3) étant calibrées à l'aide d'un moyen de calibrage (31).

4. Procédé selon une ou plusieurs des revendications précédentes, avec lequel
- à l'intérieur de la zone (511) identifiée, en partant d'un point zéro du système de coordonnées en grille bidimensionnel, des valeurs clair-foncé sont attribuées à au moins une partie des pixels ; et avec lequel
- au moins des portions du motif d'éclairage (21) projeté sur la surface (51), notamment les bandes d'un motif à bandes, sont identifiées dans la ou les images au moyen de la détection des contours en partant de valeurs de départ préalablement spécifiées,
- les pixels ayant des valeurs clair-foncé égales ou similaires jusqu'à une valeur d'écart prédéterminée étant identifiés comme associés.

5. Procédé selon une ou plusieurs des revendications précédentes, avec lequel, pour chaque pixel d'un groupe de pixels identifiés comme associés, la première dérivée d'une relation fonctionnelle trouvée, notamment la pente d'un graphe de fonction trouvé, est déterminée.

6. Procédé selon une ou plusieurs des revendications précédentes, avec lequel la taille des défauts de surface (OF) individuels identifiés est identifiée par détermination d'un point central du défaut de surface (OF) respectif et d'au moins une valeur extrême (E) espacée du point central (MP).

7. Procédé selon une ou plusieurs des revendications précédentes, avec lequel au moins un marqueur (M), notamment quatre marqueurs (M) sont disposés sur la surface (51) de l'objet (5) et la position du ou des marqueurs (M) à l'intérieur de la ou des images enregistrées est déterminée.

8. Procédé selon une ou plusieurs des revendications précédentes, avec lequel
- l'au moins un premier dispositif d'éclairage (2) et/ou l'au moins une caméra (3) est déplacé par rapport à l'objet tridimensionnel (5) ; ou
- avec lequel l'objet tridimensionnel (5) est déplacé par rapport à l'au moins un premier dispositif d'éclairage (2) et/ou l'au moins une caméra (3).

9. Procédé selon une ou plusieurs des revendications précédentes, avec lequel
- les défauts de surface (OF) identifiés sont classifiés par une comparaison avec au moins une fonction de modèle (MF), notamment avec une fonction de cercle et/ou une fonction d'ellipse, et/ou un modèle de défauts de surface (OF) déjà classifiés, des modifications caractéristiques et/ou une suppression de la première dérivée d'une relation (mathématique) fonctionnelle déjà trouvée, et les données de mesure et/ou d'interprétation des défauts de surface (OF) ainsi classifiés sont enregistrées dans une base de données, notamment une base de données en nuage ; et/ou
- les défauts de surface (OF) identifiés sont classifiés par une comparaison avec des entrées de base de données, notamment avec des entrées de base de données d'une base de données comprenant des données de mesure et/ou d'interprétation des défauts de surface (OF) déjà classifiés, et les données de mesure et/ou d'interprétation des défauts de surface (OF) classifiés sont enregistrées dans une base de données, notamment une base de données en nuage.

10. Arrangement (1) de reconnaissance et d'analyse de défauts de surface (OF) d'objets tridimensionnels (5) comprenant une surface réfléchissante (51), notamment de carrosseries de véhicule, notamment conformément à un procédé selon une ou plusieurs des revendications 1 à 9, comprenant au moins
- un premier dispositif d'éclairage (2), notamment un arc d'éclairage ou un module manuel, destiné à la projection d'un motif d'éclairage (21) sur une surface (51) de l'objet (5) ;
- une caméra (3), pouvant notamment être activée par une barrière photoélectrique (11), destinée à enregistrer des images sous la forme d'un graphique matriciel constitué de pixels ; et
- un dispositif de commande et d'analyse de données (4) ;
**caractérisé en ce que**
- le dispositif de commande et d'analyse de données (4) est conçu pour, à l'aide d'une ou de plusieurs images enregistrées au moyen de la caméra (3) sous la forme de graphiques matriciels constitués de pixels, identifier des défauts de surface (OF) sur la surface (51) de l'objet (5) à l'aide d'un système de coordonnées en grille bidimensionnel,
- une zone (511) de la surface (51) enregistrée de l'objet (5) sur laquelle est projeté le motif d'éclairage (21) étant identifiée à l'intérieur de la ou des images enregistrées ;
- un système de coordonnées en grille bidimensionnel avec des coordonnées x et y pour chaque pixel étant attribué à la zone (511) identifiée ;
- à l'intérieur de la zone (511) identifiée, à partir d'un point zéro du système de coordonnées en grille bidimensionnel, des valeurs d'intensité étant attribuées à au moins une partie des pixels ; et
- au moins des portions du motif d'éclairage (21) projeté sur la surface (51) étant identifiées dans la ou les images au moyen de la détection des contours en partant de valeurs de départ préalablement spécifiées,
- les pixels ayant des valeurs d'intensité égales ou similaires jusqu'à une valeur d'écart prédéterminée étant identifiés comme associés ;
- une relation fonctionnelle pour le groupe respectif de pixels identifiés comme associés étant établie à l'aide d'un groupe de pixels identifiés comme associés ;
- au moins des portions du motif d'éclairage (21) projeté sur la surface (51) dans la ou les images étant classifiées à l'aide de la première dérivée d'une relation fonctionnelle trouvée ;
- et des défauts de surface (OF) étant identifiés à l'intérieur de la zone (511) identifiée dans les portions classifiées à l'aide de modifications caractéristiques et/ou d'une suppression de la première dérivée d'une relation fonctionnelle trouvée.

11. Arrangement (1) selon la revendication 10, comprenant notamment un premier dispositif d'éclairage (2) réalisé sous la forme d'un arc d'éclairage mobile sur au moins deux, ou de préférence quatre rouleaux (13), **caractérisé en ce**
- **que** le premier dispositif d'éclairage (2), notamment l'arc d'éclairage, comporte au moins un, de préférence deux miroirs (12), lesquels sont de préférence disposés sur le premier dispositif d'éclairage (2) le long d'un axe longitudinal (LA) voisin du sol,
- l'au moins un miroir (12) étant de préférence monté pivotant sur le premier dispositif d'éclairage (2) et conçu pour projeter par réflexion un motif d'éclairage (21), notamment un motif à bandes du premier dispositif d'éclairage (2) sur une surface (51) de l'objet (5), notamment sur la surface (51) de l'objet (5) à proximité du sol ;
et/ou
- **que** le premier dispositif d'éclairage (2), notamment l'arc d'éclairage, comporte au moins un, de préférence deux deuxièmes dispositifs d'éclairage (201), lesquels sont de préférence disposés sur le premier dispositif d'éclairage (2) le long d'un axe longitudinal (LA) voisin du sol,
- le deuxième dispositif d'éclairage (201) étant de préférence monté pivotant sur le premier dispositif d'éclairage (2) et conçu pour projeter un motif d'éclairage (21), notamment un motif à bandes, sur une surface (51) de l'objet (5), notamment sur la surface (51) de l'objet (5) à proximité du sol.
